# EUROPÄISCHE PATENTSCHRIFT

(11) **EP 0 678 429 B1**
(45) Veröffentlichungstag und Bekanntmachung des Hinweises auf die Patenterteilung: **14.05.1997**
(21) Anmeldenummer: 95103737.3
(22) Anmeldetag: 15.03.1995
(51) Int. Cl.: B60S 5/04

(54) **Tragbares Reifenfüllgerät**
Portable tyre inflator
Appareil portable de gonflage de pneus

(30) Priorität: 18.04.1994 DE 4412777
(43) Veröffentlichungstag der Anmeldung: 25.10.1995
(73) Patentinhaber: MAHLE GMBH, D-70376 Stuttgart (DE)
(72) Erfinder: Zolldann, Wolf, D-73773 Aichwald (DE)

(56) Entgegenhaltungen:
- DE-A- 4 215 620
- DE-B- 1 201 705
- FR-A- 2 506 705

## Beschreibung

Die Erfindung betrifft ein tragbares Reifenfüllgerät nach dem Oberbegriff des Anspruchs 1.

Ein derartiges Gerät ist aus DE-B-1 201 705 bekannt.

Ein solches Gerät soll bei optisch ansprechender und ergonomisch günstiger Form rationell herstellbar sein. Außerdem sollen sämtliche Einbauteile möglichst sicher gegen Beschädigungen durch Außeneinflüsse geschützt sein.

Zu diesem Zweck ist das Gerät nach den kennzeichnenden Merkmalen des Anspruchs 1 ausgebildet.

Zweckmäßige Ausgestaltungen sind Gegenstand der Unteransprüche.

Die Erfindung beruht auf dem Gedanken, den Tragarm einschließlich des Haltegriffes in ein gemeinsames Gehäuse des Gerätes zu integrieren und das gesamte Gehäuse lotrecht zweizuteilen. Nicht direkt in das Gehäuse integrierbare Funktionsteile sollen lediglich in einem Steck- bzw. Schiebesitz in dem aus zwei möglichst spiegelbildlich gleichen Gehäuseteilen zusammengefügten Gehäuse gehalten sein. Soweit luftführende Verbindungen zwischen den einzelnen Funktionsteilen notwendig sind, sollen diese durch in dem Gehäuse verlegte Schläuche erzeugt werden. In das Gehäuse soll ein aus Kunststoff geformter der Innenform des Gerätegehäuses angepaßter Druckluftbehälter einsetzbar sein. Dadurch soll einerseits das Gehäusevolumen optimal ausgenutzt werden und zum anderen soll durch das Gehäuse ein Schutz gegen Beschädigung des Druckluftbehälters geschaffen werden und zwar auch als Berstschutz.

Ein Ausführungsbeispiel der Erfindung ist in der Zeichnung dargestellt.

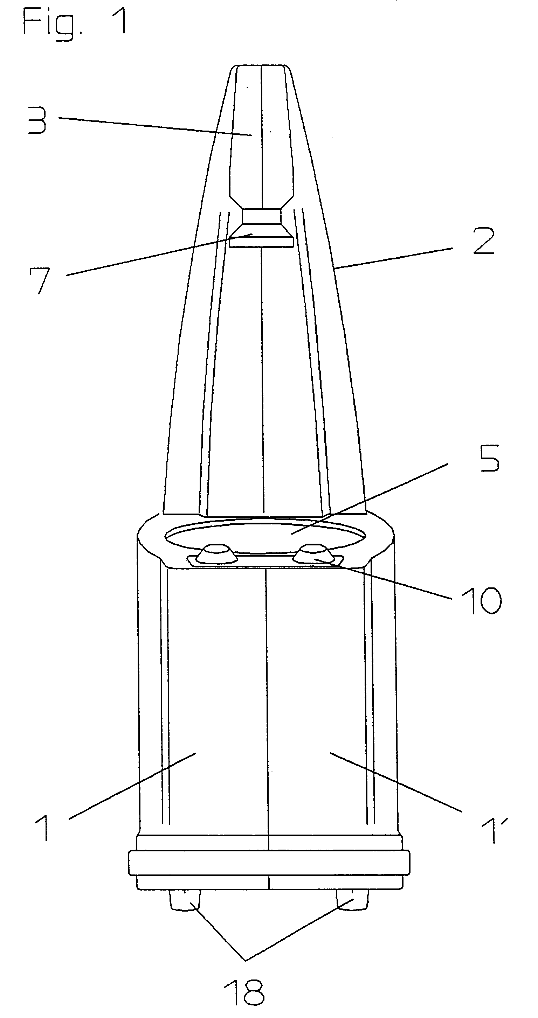

Es zeigen
- Fig. 1: eine Ansicht eines Reifenfüllgerätes von vorne,

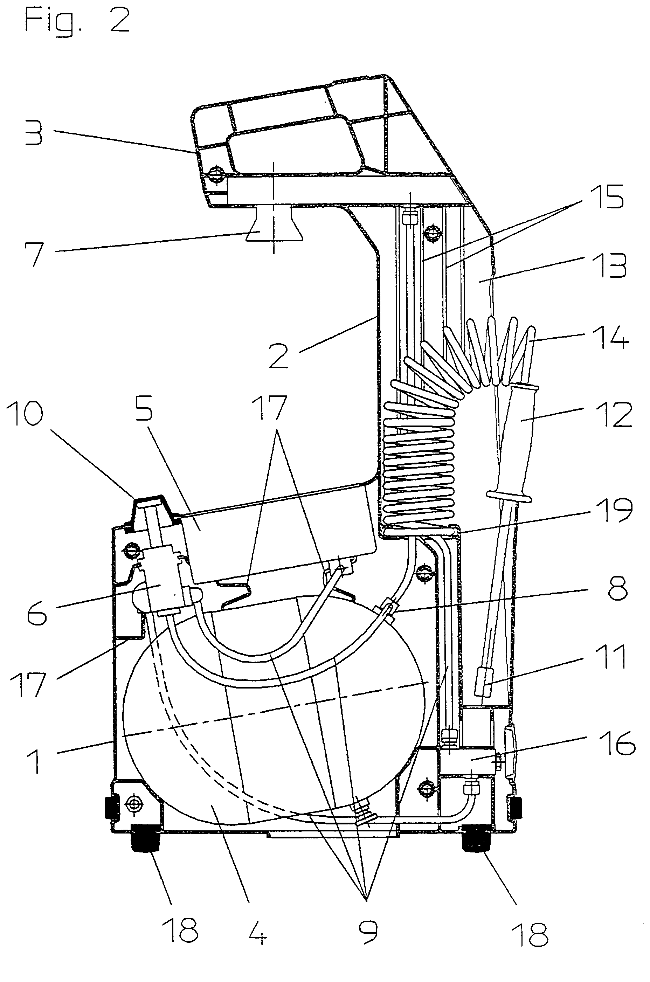

- Fig. 2: eine Ansicht in das Innere einer der der beiden Gehäusehälften des Gehäuses.

Das Reifenfüllgerät besitzt ein sämtliche Funktionsteile entweder selbst bildendes oder einschließendes Gehäuse, das aus zwei spiegelbildlich etwa gleichen Hälften 1 und 1' besteht. Diese Hälften 1 und 1' sind vorzugsweise Kunststoffschalen. Die Verbindung dieser beiden Hälften kann über einige wenige Schrauben erfolgen.

Die Schalenhälften 1 und 1' sind so geformt, daß sie in zusammengebautem Zustand einerseits einen Tragarm 2 bilden und andererseits einen Druckluftbehälter 4 zusammen mit einem von außen ablesbaren Manometer 5 und einem Steuerventil 6 vollständig umschließen.

In dem oberen als Handgriff 3 ausgebildeten Teil des Tragarmes 2 befindet sich ein Einfüllventil 7 für den Druckluftbehälter 4.

Der Druckluftbehälter 4 besitzt lediglich einen Stutzen für einzuführende und abzuführende Luft. Die luftführenden Verbindungen zwischen dem Stutzen 8 und dem Einfüllventil 7 einerseits und dem Steuerventil 6 andererseits bilden in eine der Gehäusehälften eingelegte flexible Leitungen 9.

Das Steuerventil 6 ist mit nach außen weisenden Betätigungsknöpfen 10 versehen, über die die zu einem aufzufüllenden Reifen zuzuführende oder von diesem abzuführende Luft gesteuert wird.

An das Steuerventil 6 ist über eine der innerhalb des Reifenfüllgehäuses verlegten Leitungen 9 ein Reifenfüllstutzen 11 angeschlossen. Der Reifenfüllstutzen 11 befindet sich an einem Handstück 12, das in einem nach außen offenen Hohlraum 13 des Reifenfüllgehäuses bei Nichtbenutzung abgelegt werden kann. In dem an das Handstück 12 angrenzenden Bereich ist die betreffende Verbindungsleitung 9 als Spiralschlauch 14 ausgeführt. Zur Aufnahme dieses Spiralschlauches 14 sind in dem Hohlraum 13 Rippen 15 in jede Gehäusehälfte 1 und 1' angeformt, zwischen denen der Spiralschlauch 14 eingeklemmt werden kann.

In dem Spiralschlauch 14 ist ausgehend von dem Reifenfüllstutzen 11 des Handstückes 12 eine weitere der Leitungen 9 integriert, durch den von dem Reifen abzulassende Luft über ein Filter 16 zur Druckmessung an das Manometer 5 geführt wird.

Der Druckluftbehälter 4, das Steuerventil 6, das Filter 16 sowie das Einfüllventil 7 sind jeweils in einem Schiebe- bzw. Stecksitz in einer der beiden Gehäusehälften 1, 1' fixierbar. Beim Schließen des Gehäuses durch ein Zusammenfügen der beiden Gehäusehälften 1 und 1' ist dann ein sicherer Klemmsitz dieser Teile innerhalb des Gehäuses des Reifenfüllgerätes gegeben. Die den Schiebe- bzw. Stecksitz ermöglichenden Teile des Gehäuses sind leicht flexibel ausgebildet, damit ein sicherer spielfreier Klemmsitz der betreffenden Teile bei montiertem Gehäuse gegeben ist. Eine Hilfe hierbei sind bei der Fixierung des Manometers 5 und des Füllbehälters 4 beispielsweise federnde Gehäuserippen bzw. -laschen 17.

Auch Standfüße 18 können in die einzelnen Gehäusehälften 1, 1' eingeschoben werden.

Die Fixierung des Spiralschlauches 14 wird in einfacher Weise dadurch erreicht, daß die unterste Spiralwindung in einen Gehäuseschiebesitz 19 eingeführt wird.

## Patentansprüche

1. Tragbares Reifenfüllgerät mit unter anderem einem Druckluftbehälter (4), einem Gehäuse (1, 1'), einem von außen ablesbaren Manometer (5), mindestens einem Steuerventil (6) zwischen dem Druckluftbehälter (4) und einem an einem Anschlußstutzen über einen Schlauch angeschlossenen beweglichen Reifenfüllstutzen (11) und einem etwa L-förmigen Tragarm (2) mit einem vertikal zum Druckluftbehälter (4) hin verlaufenden großen Schenkel und einem horizontalen zum Anfassen bestimmten oberhalb des Druckluftbehälters kleinen als Handgriff (3) ausgebildeten Schenkel, an dessen Unterseite sich ein an eine stationäre Druckluftquelle anschließbares Einfüllventil (7) befindet, wobei dieses Ventil unter dem Gewicht des gesamten Füllgerätes auf ein druckquellenseitiges Gegenventil aufsetzbar ist,
**gekennzeichnet** durch die Merkmale
- das Gehäuse ist lotrecht zweigeteilt (Hälften 1, 1') und der Tragarm (2) ist ein Bestandteil dieses Gehäuses,
- zumindest der Druckluftbehälter (4), das Manometer (5), das Steuerventil (6) und das Einfüllventil (7) für den Druckluftbehälter (4) sind zwischen den beiden miteinander verbundenen Gehäusehälften (1, 1') lediglich eingeklemmt.

2. Reifenfüllgerät nach Anspruch 1,
dadurch **gekennzeichnet,**
daß die zwischen den beiden Gehäusehälften (1, 1') eingeklemmten Bauteile (7, 5, 6, 4, 16) in jedem der beiden Gehäuseteile (1, 1') in einer Art Schiebe- bzw. Stecksitz gehalten sind.

3. Reifenfüllgerät nach Anspruch 2,
dadurch **gekennzeichnet,**
daß zumindest einzelne der in einem Schiebe- bzw. Stecksitz gelagerten Teile (5, 4, 6) elastisch für einen spielfreien Sitz gegen einen festen Gehäuseanschlag verspannt sind.

4. Reifenfüllgerät nach einem der vorhergehenden Ansprüche,
dadurch **gekennzeichnet,**
daß der Druckluftbehälter (4) lediglich einen einzigen Anschlußstutzen (8) für zu- und abzuführende Luft besitzt.

5. Reifenfüllgerät nach einem der vorhergehenden Ansprüche,
dadurch **gekennzeichnet,**
daß die luftführenden Verbindungen zwischen den einzelnen Ventilen und Anschlüssen (7, 6, 8, 5, 16, 11) innerhalb des Gehäuses verlegte flexible Leitungen (9) sind.

6. Reifenfüllgerät nach einem der vorhergehenden Ansprüche,
dadurch **gekennzeichnet,**
daß ein als Spiralschlauch (14) ausgebildeter Teil der Leitungen (9) in einem Hohlraum (13) des Tragarmes (2) zur Ablage bei Nichtgebrauch einklemmbar ist.

7. Reifenfüllgerät nach Anspruch 6,
dadurch **gekennzeichnet,**
daß der Spiralschlauch (14) durch Einschieben seiner dem Stutzen (8) nächstgelegenen Spiralwindung in eine U-förmige Halteschiene eines Schiebesitzes (19) fixierbar ist.

## Claims

1. Portable tyre inflator with inter alia a compressed air container (4), a housing (1, 1'), a pressure gauge (5) able to be read from outside, at least one control valve (6) between the compressed air container (4) and a movable tyre inflator nozzle (11) connected by way of a hose to a connecting adaptor and an approximately L-shaped support arm (2) with a large side extending vertically towards the compressed air container (4) and a horizontal small side intended for picking up and constructed as a handle (3) above the compressed air container, on the underneath of which side is located a filler valve (7) able to be connected to a stationary compressed air source, this valve being able to be attached to a counter-valve on the pressure source side, under the weight of the entire inflator,
characterised by the features
- the housing is divided vertically into two (halves 1, 1') and the support arm (2) is a component of this housing,
- at least the compressed air container (4), the pressure gauge (5), the control valve (6) and the filler valve (7) for the compressed air container (4) are solely clamped between the two interconnected housing halves (1, 1').

2. Tyre inflator according to Claim 1, characterised in that the components (7, 5, 6, 4, 16) clamped between the two housing halves (1, 1') are held in each of the two housing parts (1, 1') in a type of sliding or push fit.

3. Tyre inflator according to Claim 2, characterised in that at least certain of the parts (5, 4, 6) mounted with a sliding or push fit are braced elastically for clearance-free seating against a stationary housing abutment.

4. Tyre inflator according to one of the preceding Claims, characterised in that the compressed air container (4) comprises solely one single connecting adaptor (8) for air to be supplied and discharged.

5. Tyre inflator according to one of the preceding Claims, characterised in that the connections carrying air between the individual valves and connectors (7, 6, 8, 5, 16, 11) are flexible lines (9) located within the housing.

6. Tyre inflator according to one of the preceding Claims, characterised in that a part of the lines (9) constructed as a spiral hose (14) can be clamped in a cavity (13) of the support arm (2) for storage when it is not in use.

7. Tyre inflator according to Claim 6, characterised in that the spiral hose (14) can be fixed by inserting its spiral coil closest to the connector (8), in a U-shaped support bar of a sliding seat (19).

## Revendications

1. Appareil portable de gonflage de pneus comportant, entre autres, un réservoir à air comprimé (4), un carter (1, 1'), un manomètre (5) lisible de l'extérieur, une vanne-pilote (6), au moins, prévue entre le réservoir à air comprimé (4) et une tubulure de gonflage de pneus (11) mobile, reliée par l'intermédiaire d'un tuyau flexible à une tubulure de raccordement, ainsi qu'une console (2) à peu près en L avec une grosse branche située dans le sens vertical en direction du réservoir à air comprimé (4), et avec une petite branche horizontale destinée à la saisie, réalisée sous forme de manche (3) au-dessus du réservoir à air comprimé, et sur le côté inférieur de laquelle se situe une soupape de remplissage (7), qui peut être raccordée à une source stationnaire d'air comprimé, cette soupape pouvant être placée sur une contre-soupape côté source de pression, sous l'effet du poids de l'ensemble de l'appareil de gonflage, caractérisé en ce que le carter est partagé en deux dans le sens vertical (moitiés 1, 1'), la console (2) faisant partie intégrante de ce carter, et en ce qu'au moins le réservoir à air comprimé (4), le manomètre (5), la vanne-pilote (6), et la soupape de remplissage (7) pour le réservoir à air comprimé (4), sont uniquement coincés entre les deux moitiés (1, 1') du carter assemblées entre elles.

2. Appareil de gonflage de pneus suivant la revendication 1, caractérisé en ce que les composants (7, 5, 6, 4, 16), coincés entre les deux moitiés (1, 1') du carter, sont maintenus dans chacune des deux parties (1, 1') en une sorte d'ajustement coulissant et/ou appuyé.

3. Appareil de gonflage de pneus suivant la revendication 2, caractérisé en ce qu'au moins différents éléments (5, 4, 6), logés en un siège coulissant et/ou appuyé, sont serrés par élasticité, pour un siège sans jeu, contre une butée fixe du carter.

4. Appareil de gonflage de pneus suivant l'une des revendications précédentes, caractérisé en ce que le réservoir à air comprimé (4) présente une tubulure de raccordement unique (8) pour l'air à injecter et à chasser.

5. Appareil de gonflage de pneus suivant l'une des revendications précédentes, caractérisé en ce que les conduites de passage d'air entre les différentes soupapes et raccordements (7, 6, 8, 5, 16, 11) sont des tuyaux flexibles (9) posés à l'intérieur du carter.

6. Appareil de gonflage de pneus suivant l'une des revendications précédentes, caractérisé en ce qu'une partie des tuyaux (9), réalisée sous forme de tuyau flexible spiralé (14), peut être coincée dans un espace creux (13) de la console (2) pour son rangement en cas de non-utilisation.

7. Appareil de gonflage de pneus suivant la revendication 6, caractérisé en ce que le tuyau spiralé (14) peut être fixé dans un rail de maintien en U d'un siège appuyé (19), par insertion de sa spire la plus proche de la tubulure (8).
